Europäisches Patentamt

European Patent Office

Office européen des brevets

(19)

(11) Publication number: **0 108 111**
**B1**

# (12) EUROPEAN PATENT SPECIFICATION

(45) Date of publication of patent specification: **25.11.87**

(51) Int. Cl.⁴: **C 10 L 5/44**

(21) Application number: **83901587.2**

(22) Date of filing: **10.05.83**

(86) International application number:
**PCT/DK83/00051**

(87) International publication number:
**WO 83/04049 24.11.83 Gazette 83/27**

(54) **A METHOD OF MANUFACTURING BRIQUETTES OF STRAW OR SIMILAR MATERIAL.**

(30) Priority: **12.05.82 DK 2125/82**

(43) Date of publication of application:
**16.05.84 Bulletin 84/20**

(45) Publication of the grant of the patent:
**25.11.87 Bulletin 87/48**

(84) Designated Contracting States:
**AT BE CH DE FR GB LI NL SE**

(56) References cited:
**EP-A-0 035 610**
**DK-B- 128 431**
**GB-A- 279 140**
**SE-A-80 075 617**
**US-A-2 162 609**
**US-A-4 309 190**

(73) Proprietor: **POULSEN, Hans Ditlev**
**Dagmarvej 23 Snejbjerg**
**DK-7400 Herning (DK)**

(72) Inventor: **POULSEN, Hans Ditlev**
**Dagmarvej 23 Snejbjerg**
**DK-7400 Herning (DK)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

EP 0 108 111 B1

# Description

The present invention relates to the production of combustible briquettes of vegetable material, e.g. straw.

The surplus of agricultural straw material is often burned off in the field, but it has already been recognized that this material is perfectly usable for the firing of both small and large furnaces, when it compressed into a compact shape, which renders the material economically transportable over relatively long distances. For the said compaction it is sufficient to add to the straw material a suitable binding agent and to press the material together in a briquetting press or extruder, whereby compacted and coherent combustible pills or briquettes are easily produced.

The preferred binding agent as used so far is a cellulose based agent, for instance as known under the Trade Mark "Wafolin". It is used in an admixture of only some 5% in order to provide for a reasonable minimum coherence in the briquetted product; the said agent, however, is relatively expensive, and the use of it is minimized to the point where the pills or briquettes are hardly coherent enough to constitute really unitary members, and a normal result is that the pills or briquettes as delivered to the furnace plant are more or less structurally dissolved, which gives rise to a certain waste. The briquettes could be stabilized by an increased admixture of the binding agent, but this would jeopardize the economy of this kind of fuel.

It is the purpose of the invention to provide for a production method, whereby briquettes can be manufactured at low costs so as to show a high or at least sufficient structural stability.

According to the invention it has been found that a remarkable effective binding agent for use in briquettes is the product commonly known as fly ash, i.e. waste ash from modern coal fired power plants. The fly ash is produced in large amounts and is generally considered as a waste product which is difficult to dispose of, though some kinds of tolerable applications have been found. In connection with the invention, however, the use of fly ash is not only tolerable, but indeed advantageous, as the effect thereof is almost fully comparable with the binding effect of the much more expensive binder agents as used hitherto. Therefore, the briquette production will be economical even if an increased percentage of fly ash binder should be required in order to ensure a reliable coherence in or of the briquettes. However, frequently the binder percentage need not even be increased as compared with the known method.

It is even a fact that usual fly ash, all according to the type thereof shown a certain content of uncombusted coal, whereby the ash as used for binding the vegetable material is not exclusively a thermally inactive component. Admittedly, of course, the fly ash contents of the briquettes will add to the production of ash by the combustion of the briquettes, but the fly ash contents are low, and besides it is worth nothing that the ash as produced by the fly ash binder will be entirely harmless to the furnace, because it will remain unchanged as already produced ash except for the burning off of its residual contents of coal.

The fly ash is effective as a binding agent when used as a dry powder, which is caused to be mixed with the vegetable material prior to the briquetting compaction of the material. It is a remarkable fact that nothing need to be changed in a conventional production of briquettes based on combustible vegetable material except for the substitution of the type of binding agent, i.e. the dry fly ash binder is supposed to be actuated by the pressure as applied to the material when it is compacted in a pill press or — normally — in an extruder device for producing a "broken sausage" of compacted precut vegetable material, e.g. having a diameter of some 5—20 cm and tending to break up into briquette lengths of about the same magnitude, when properly treated with an efficient binding agent. As mentioned, with the use of conventional binding agents for straw material, it is necessary to use an uneconomical amount or percentage of binding agent for making the single briquettes or pieces of the "broken sausage" structurally unitary or coherent for avoiding too much dust and litter, while with the use of a fully acceptable amount or percentage of fly ash as binding agent the briquettes may present themselves as practically fully coherent members of high heating value.

It is believed that an important factor in the actuation of the fly ash binder is the relatively high temperature as created by the compression of the material in the briquetting press or extruder, this temperature rising to 75—250°, preferably to 100—200°C. In other words, the briquetting press or extruder should be designed so as to cause such a temperature rise in the material mainly or solely by virtue of the applied mechanical pressure.

It is supposed that the observed high heating value of the briquettes should be seen on the background that the dry fly ash as mixed into the cut vegetable material e.g. straw will absorb some of the water as contained even in a relatively dry material, whereby the heating value of the vegetable material itself will be improved. Ordinary dry fly ash may contain some 2—3% of water, while the straw material will typically hold some 10—25% of water. It is of major importance, however, that water is vapourized from the product by the said high briquetting temperature, and in practice a cloud of steam can be observed adjacent the extruder nozzle of an extruder operating according to the invention.

Fly ash has previously been suggested for use as a binding agent, but under rather different conditions. Thus, in the European Patent Application No. 80300631.1, published under EP—A—35,610, fly ash is used as a component in an aqueous slurry of solid combustible wastes, the fly ash being used together with a hydraulic cement in the slurry, which is allowed to set, whereafter the product is pulverized to form a fuel. The material is not compressed or briquetted, and the ability of the fly ash to get actuated as a binding agent by pressure and heat is not recognized in that publication.

The USA patent specification No. 4,309,190 discloses a process of producing coal briquettes for gasification or devolatilization, whereby 10—30% of ash is mixed with coal powder and the mix is briquetted. The ash is not referred to as fly ash, though this kind of ash would be available in quantities much larger than the types of ash specified as examples in said specification, and it is not specified how or why the ash content produces a binding effect. It is mentioned that without the ash content the coal briquettes contain so many air pockets that they are not strong enough. However, there is no indication as to the strength requirements, e.g. as to coherence for long distance transportation. The temperature as connected with the briquetting compaction of the material is specified to be 20—100°C, which is generally too low for actuating fly ash as a binding agent. Though in rare cases 80°C may be enough, the lower limit being 75°C, the compaction temperature according to the invention should normally be more than 100°C, typically some 150°C up to 200°C.

The USA patent specification No. 2,162,609 relates to compressed animal feed and suggests that a dry feed particle material is mixed with a small percentage of a hydro-silicate of aluminium such as bentonite or a similar jell-forming material, which shows a binder effect when the compound is subjected to superficial moisturizing. No particulars are given as to pressure and temperature in the pelleting or briquetting process, and though fly ash normally shows a high content of hydro-silicates of aluminium nothing in the known disclosure as here discussed points towards the use of fly ash as an almost universal binding agent, when actuated solely by pressure and temperature in a briquetting process. The known addition of water or moisture could not in any way be important or even attractive as far as the invention is concerned.

Thus, the known contributions as to the use of fly ash or even similar materials do not reveal the essence of the present invention, viz. the ability of fly ash to act as an efficient binding agent in relatively dry surroundings when subjected to a sufficiently high temperature and pressure in connection with a briquetting compaction of the relevant material. This ability seems to be universal, i.e. roughly independent of the material as otherwise present in the briquettes, and for that sake the material might well be a feed material, e.g. in granular shape, whereby feedstuff pellets or briquettes are perfectly produceable by the method as here specified for the production of combustible briquettes. A relatively small amount of fly ash in a feedstuff material is not at all disadvantageous, as it may represent a directly valuable mineral supplement to the food of the animals.

On the other hand, the said binding effect of the fly ash is pronounced even when little or no other material is present, i.e. there will be no upper limit for the possible percentage of fly ash in the product. It might seem unrealistic to think of some extremely overdosage of binding agent in any material, but an exception will be the situation, in which the desired properties of the product coincide with the properties of the binding agent itself. In the present connection such a coincidence will occur as far as the heating value is concerned, i.e. the percentage of fly ash binder may be high, when the particular type of fly ash has a high residual content of uncombusted coal. It is a remarkable fact that some types of fly ash show a very high content of uncombusted coal, in fact up to 80—90%, while other types do not contain more than some 10% of coal (carbon), and it will be understood, therefore, that an attractive combustible briquette material will be produceable from the first mentioned type of fly ash with little or even no admixture of other combustible vegetable material such as straw. The fly ash still acts as a binding agent when subjected to pressure and a resulting high temperature, even when binding against itself only.

According to this aspect of the invention it may be an attractive possibility to subject any fly ash product to a compaction treatment, even when the fly ash is of no interest from a heat generating point of view, but for bringing the fly ash into a kind of a solid state, in which it is easy to handle and store as a pure waste product.

As mentioned, the residual coal contents of the fly ash may vary considerably all according to the type of the fly ash or rather the type of the firing system having produced the ash, as well known to the experts. Attractive fuel briquettes may be produced by compaction of pure fly ash of a type holding some 80—85% of coal (carbon), and generally, of course, a high percentage of carbon in the fly ash is advantageous in fuel briquettes as produced according to the invention. The ability of the fly ash to be actuated as a binding agent by pressure and heat does not seem to be largely affected by the residual carbon contents thereof. However, when the fly ash is used in but a small percentage in the material to be briquetted, then it is of course less important whether the fly ash shows any high content of carbon, and a fly ash holding only 10% of carbon is perfectly usable in straw briquettes, when these contain only some 5% of fly ash.

By way of example, briquettes of wheat straw were produced by mixing the straw material with 4.5% of a dry fly ash powder holding 20% of carbon and feeding the mixture to an extruder having a nozzle inlet opening of a diameter of 5 cm and a compaction piston of a slightly smaller diameter. Outside the front end of the piston in the foremost position thereof the nozzle channel was widened to a diameter of 6.6 cm and continued forwardly through a short conically narrowing portion into an outlet nozzle portion of a diameter of 6 cm. A piston pressure of some 10—20 tons was applied for driving the material through the nozzle at such a rate that a compaction temperature of some 150°C was created. The product was an extrusion tending to break into unitary briquettes of a length of 10—20 cm. The water percentage of the product was 7%, while the original water percentage of the straw was 15%.

It should be mentioned that based on a similar production method it has been found commercially attractive to arrange for the delivery of a provisional amount of about 250 tons of straw briquettes from Denmark to Switzerland. Still more relevant supplies, of course, will take place to local consumers, whether to private firing furnaces or to regional power of heating plants.

It is deemed important that the extruder nozzle shows a conically narrowing portion for promoting a rapid temperature increase in the material as a result of the compaction operation of the piston. The necessary counter pressure may well be created by a straight nozzle channel, owing to the frictional engagement between the material and the channel wall, but the channel would have to be rather long for providing the necessary counter pressure, and this would imply a spreading of the heat development and an associated widespread cooling of the material under compaction, whereby the desired high temperature for the actuation of the fly ash binder will hardly be obtainable or at least only with a high loss of applied energy.

In practice the briquettes according to the invention may be produced in the same manner as the briquettes based on the use of a cellulose binder, with the exception that fly ash substitutes the more expensive cellulose binder and that care should be taken to effect the compaction in such a manner that a relatively high temperature is produced in the material, this being a question of skill in adapting the compaction pressure and conditions to the requirements. Thus, it is deemed unnecessary to further describe or exemplify an apparatus for carrying out the method of the invention, because such apparatus may be practically the same as already known for the production of briquettes of the type based on a cellulose binder. This fact, of course, is another significant advantage of the invention.

Processes have been developed for extracting the heavy metal and certain other components from the fly ash, whereby the ash thus treated will be still more advantageous as a briquetting binding agent, partly because of the associated rise of the carbon percentage as far as fuel briquettes are concerned, and partly due to the general environmental significance of the purified product.

It should be mentioned that straw briquettes based on fly ash as binding agent seem to retain their shape when being burnt, until all the combustible material has burnt; this is advantageous in making the briquettes well suited for use in conventional cool fired furnaces. In several such furnaces, even in large power stations, it is desirable to employ fuel pills of small size, e.g. rod shaped pills of a diameter of 1 cm and a length of one or a few centimeters; it has proved possible to produce such pills according to the invention by means of a standard matrix press with an eccentrically rotating piston.

## Claims

1. Method of manufacturing a combustible pill or briquette material, whereby the material is produced by compaction of a mixture of a combustible vegetable material and a binding agent, characterized in that fly ash is used as the binding agent and that the mixture is compacted by a pressure sufficient to generate in the substantially dry mixture a temperature of at least 75°C.

2. Method according to claim 1, whereby the compaction pressure is 250—2500 kp/cm².

3. Method according to claim 1 or 2, in which the fly ash percentage is adjusted to 3—15% by weight.

4. Method according to claims 1—3, wherein the said temperature is between 100 and 200°C.

5. Method according to claims 1—4, wherein the fly ash is carbon rich and is used in an amount in excess of 10% by weight.

## Patentansprüche

1. Verfahren zur Herstellung von brennbarem Pillen- oder Brikettmaterial, wobei das Material durch Verdichten eines Gemisches aus einem brennbaren pflanzlichen Material und einem Bindemittel erzeugt wird, dadurch gekennzeichnet, dass als Bindemittel Flugasche verwendet wird, und dass das Gemisch unter einem Druck verdichtet wird, der genügt, um in dem im wesentlichen trocknen Gemisch eine Temperatur von mindestens 75°C zu bewirken.

2. Verfahren nach Anspruch 1, bei dem das Verdichtungsdruck 250 bis 2500 kp/cm² ist.

3. Verfahren nach Anspruch 1 oder 2, bei dem der Prozentsatz an Flugasche auf 3 bis 15 Gew.% eingestellt ist.

4. Verfahren nach Ansprüchen 1 bis 3, bei dem die genannte Temperatur zwischen 100 und 200°C liegt.

5. Verfahren nach Ansprüchen 1 bis 4, bei dem die Flugasche reich an Kohlenstoff ist und in einer Menge über 10 Gew.% verwendet wird.

## Revendications

1. Une méthode de fabrication d'une matière à pilule combustible ou d'une matière à briquette, ladite matière étant produite par compaction d'un mélange d'une matière végétale combustible et un liant, caractérisée en ce qu'on utilise de la cendre volante comme liant et que le mélange est compacté par une pression suffisante à générer dans le mélange substantiellement sec une température d'au moins 75°C.

2. Une méthode selon la revendication 1, dans laquelle la pression de compaction est 250—2500 kp/cm².

3. Une méthode selon la revendication 1 ou 2, dans laquelle le pourcentage de cendre volante

7

0 108 111

8

est ajusté à 3—15% en poids.

4. Une méthode selon les revendications 1—3, dans laquelle ladite température varie entre 100 et 200°C.

5. Une méthode selon les revendications 1—4, dans laquelle la cendre volante est riche en carbone et est utilisée dans une quantité excédant 10% en poids.